# EUROPEAN PATENT APPLICATION

(11) **EP 1 903 227 A1**
(43) Date of publication of application: **26.03.2008**
(21) Application number: 07111442.5
(22) Date of filing: 29.06.2007
(51) Int. Cl.: F16C 17/04, F16C 33/10, G02B 26/12, F16C 39/04

(54) **Spindle motor, spindle motor assembly and image forming device having the same**

(30) Priority: 22.09.2006 KR 20060092293
(71) Applicant: Samsung Electronics Co., Ltd., Suwon-si 442-742 Gyeonggi-do (KR)
(72) Inventor: You, Je-hwan 205-1202, Taeyeong Apt, Gyeonggi-do (KR)
(74) Representative: Johnson, Graham Pierssene

(57) **Abstract**

There is provided a spindle motor (100) and a spindle motor assembly, and an image forming device having the same. The spindle motor (100) includes a shaft (130) rotatably coupled to a stator (120), a rotor (140) to rotate with the shaft (130), and a dynamic pressure generator (300) to generate a dynamic pressure to make the rotor (140) move axially toward the stator (120) by an ambient air flow generated during a rotation of the rotor (140).

## Description

### FIELD OF THE INVENTION

The present general inventive concept relates to spindle motors, spindle motor assemblies and image forming devices.

### BACKGROUND TO THE INVENTION

In general, an image forming device, such as a copying machine or a laser printer, employs an LSU (Laser Scanning Unit) to form an electrostatic latent image on a photoconductive medium, such as a photoconductive drum.

The LSU may include a light source to emit a laser light, a polygon mirror to scan the emitted laser light from the light source as a scanning light, a conventional spindle motor for rotating the polygon mirror and optical members to guide the scanning light onto the photosensitive medium. Among them, the conventional spindle motor is divided into a stator and a rotor. The stator having a driving coil is fixed onto a body frame of the LSU or a circuit board installed in the body frame.

The rotor of the conventional spindle motor includes a shaft, a rotor housing for supporting a magnet, a rotor frame coupled to the rotor housing for supporting the polygon mirror, and a mirror fastening member for fixing the polygon mirror onto the rotor frame.

When the rotor having the above structure rotates, the parts housed by the rotor rotate with the rotor, while the shaft is being rotatably supported to the body frame through a bearing in-between. That is, the parts of the rotor are integrally connected with each other to thereby act as a rotating body that rotates with the polygon mirror.

Recently, as printers, copying machines, fax machines, and multifunctional devices come in diverse designs, sizes, applications, etc., image forming devices of diverse models have been developed and released. Depending on the model of an image forming device being developed, the LSU may be installed in a forward or reverse direction. That is, according to design conditions, the LSU may be installed in various poses, for example, being flipped horizontally, being tilt over, etc.

If the conventional spindle motor is not installed in the normal (forward) direction, for example, if the conventional spindle motor is flipped, the rotor is influenced by gravity. When the rotor under gravity rotates at high speed or receives a severe shock from the outside, the rotor may be dislocated from its normal mounting. Therefore, a stopper for preventing the dislocation of the rotor is additionally provided.

However, such a stopper is simply for preventing the complete separation of the rotor from the stator and therefore, the stopper cannot be a fundamental solution to inhibit the rotor from separating from the stator in an axial direction along the shaft. When the rotor, comprising the shaft, moves in the axial direction of its shaft, the structure where the polygon mirror is installed, at a position balancing between an attractive force between the stator and the rotor and the dead weight of the rotor, is imbalanced and the rotation of the rotor becomes unstable. In result, the normal scanning operation is interrupted.

### SUMMARY OF THE INVENTION

Preferred embodiments of the present invention aim to provide a spindle motor with an improved structure capable of restraining movement of a rotor in an axial direction, a spindle motor assembly and an image forming device.

Additional features of the present general inventive concept will be set forth in part in the description which follows and, in part, will be obvious from the description, or may be learned by practice of the general inventive concept.

According to an aspect of the present invention there is provided a spindle motor including a shaft rotatably coupled to a stator, a rotor to rotate with the shaft and a dynamic pressure generator to generate a dynamic pressure to make the rotor move toward the stator by an ambient air flow generated during a rotation of the rotor.

The rotor may include a rotor housing to support a magnet, and a rotor frame coupled to the rotor housing, onto which the shaft is fixed and the dynamic pressure generator is mounted.

The dynamic pressure generator may include a dynamic pressure generating pattern formed in a predetermined pattern on an outer surface of the rotor frame.

The dynamic pressure generating pattern may include a plurality of helical grooves that are helically formed outwardly from a center of the rotation of the rotor frame.

Each of the helical grooves may have an increasing width as it goes further from the center of the rotation.

Each of the helical grooves may have an increasing depth as it goes further from the center of the rotation.

Each of the helical grooves may have an increasing cross-section as it goes further from the center of the rotation.

The dynamic pressure generator may include a dynamic pressure generating pattern formed in a predetermined pattern on the outer surface of the rotor crossing the shaft axial direction to guide the ambient air to the center of the rotation during the rotation of the rotor.

The dynamic pressure generator may include a propeller formed on the outer surface of the rotor to guide the ambient air to the center of the rotation during the rotation of the rotor.

According to a further aspect of the present invention there is provided a spindle motor assembly, including a shaft rotatably coupled to a stator, a rotor to rotate with the shaft, a polygon mirror to rotate together with the rotor, and a dynamic pressure generator to generate a dynamic pressure to make the rotor contact toward the stator by an ambient air flow generated during a rotation of the rotor.

The spindle motor assembly may further include a fixing piece coupled between the polygon mirror and the rotor, to fix the polygon mirror onto the rotor.

According to a further aspect of the present invention there is provided an image forming device, including a developing unit, installed in a main body of the image forming device and having an image bearer, and a laser scanning unit to scan a laser light beam to the image bearer, the laser scanning unit including a shaft rotatably coupled to a stator, a rotor to rotate with the shaft, a polygon mirror to rotate with the rotor, and a dynamic pressure generator to generate a dynamic pressure to make the rotor move toward the stator by an ambient air flow generated during a rotation of the rotor.

The dynamic pressure generator may include a dynamic pressure generating pattern having a plurality of helical grooves that are helically formed outwardly from a center of the rotation of the rotor frame.

The dynamic pressure generator may include a propeller formed on the outer surface of the rotor frame.

The laser scanning unit is suitably installed in the main body such that the spindle motor assembly is upside down in the main body with respect to gravity.

According to a further aspect of the present invention there is provided a spindle motor, including a stator, a rotor to rotate with respect to the stator, and a dynamic pressure generator formed on the rotor to generate a dynamic force to push the rotor toward the stator during a rotation of the rotor.

The dynamic pressure generator may guide an air flow generated during the rotation of the rotor to generate the dynamic force.

The dynamic pressure generator may include a patterned rotating portion to rotate with the rotor and to guide an air flow generated during the rotation of the rotor to generate the dynamic force.

The dynamic pressure generator may include a groove formed on a surface of the rotor in a direction to generate an air flow in the center of the rotor.

The rotor may rotate about a rotation axis, and the dynamic pressure generator may be formed on a surface of the rotor perpendicular to the rotation axis.

The dynamic pressure generator may include a plurality of grooves formed between a surface of the rotor to generate a pressure in the grooves opposite to a rotation direction of the rotor.

According to a further aspect of the present invention there is provided an image forming apparatus, including a developing unit, installed in a main body of the image forming device and having an image bearer, and a laser scanning unit to scan a laser light beam to the image bearer, the laser scanning unit having a spindle motor, the spindle motor including a stator, a rotor to rotate with respect to the stator, and a dynamic pressure generator formed on the rotor to generate a dynamic force to push the rotor toward the stator during a rotation of the rotor.

The laser scanning unit may further include a stopper to limit a motion of the rotor with respect to the stator.

### BRIEF DESCRIPTION OF THE DRAWINGS

The present invention will become apparent and more readily appreciated from the following description of the embodiments, taken in conjunction with the accompanying drawings of which:
FIG. 1 is a schematic perspective view illustrating a spindle motor assembly according to an exemplary embodiment of the present general inventive concept;
FIG. 2 is a cross-sectional view illustrating the spindle motor assembly illustrated in FIG. 1;
FIG. 3 is a plan view illustrating a dynamic pressure generator of FIG. 1;
FIG. 4 diagrammatically illustrates the structure of a helical groove illustrated in FIG. 3;
FIG. 5 is a schematic perspective view illustrating an image forming device according to an exemplary embodiment of the present general inventive concept; and
FIG. 6 is a schematic perspective view illustrating a spindle motor assembly according to another exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

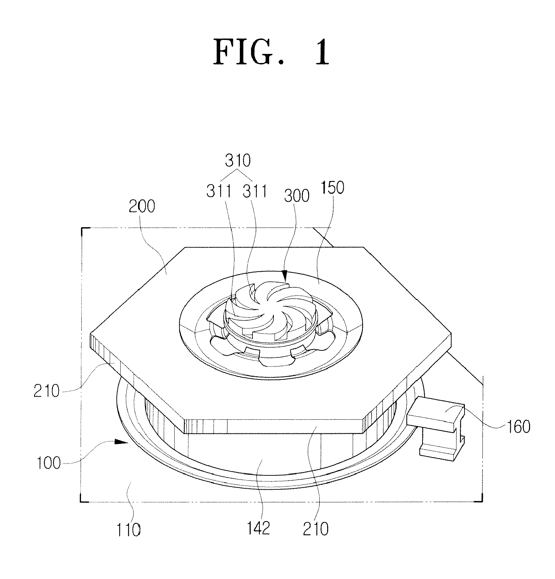

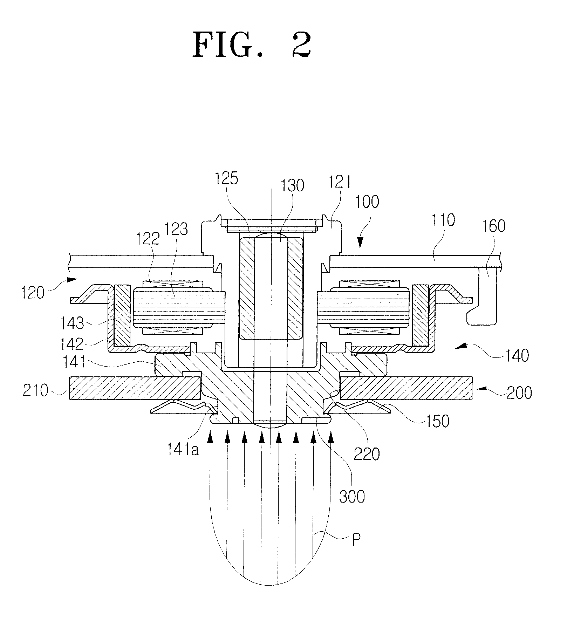

Referring to FIGS. 1 and 2, a spindle motor assembly according to an exemplary embodiment of the present general inventive concept may include a spindle motor 100, a polygon mirror 200 supported by the spindle motor 100, and a dynamic pressure generator 300.

FIG. 2 is a cross-sectional view illustrating a state in which the spindle motor 100 is installed in a reverse direction with respect to gravity. As illustrated in FIG. 2, the spindle motor 100 may include a stator 120 mounted on a substrate 110, a shaft 130 rotatably coupled to the stator 120, and a rotor 140 coupled to the shaft 130, thereby rotating together.

The stator 120 may include a bearing housing 121 coupled onto the substrate 110, and a stator core 122 and a coil 123 that are coupled to the outside of the bearing housing 121. The stator core 122 can be fit-pressed to the circumference of the bearing housing 121, and the coil 123 can be wound around the stator core 122. The interior of the bearing housing 121 can be hollow, and a bearing 125 can be installed therein.

The bearing 125 and the shaft 130 are coupled to each other. Therefore, the bearing 125 helps the shaft 130 to be rotatably supported by the stator 120, that is, the bearing housing 121.

The rotor 140 may include a rotor frame 141 coupled to the shaft 130, a rotor housing 142 coupled to the rotor frame 141, and a magnet 143 supported by the rotor housing 142. As the shaft 130 can be fit-pressed into the rotor frame 141, the rotor frame 141 and the shaft 130 rotate together. In addition, as the rotor housing 142 is coupled on the rotor frame 141, it also rotates with the rotor frame 141 and the shaft 130. The magnet 143 can be installed on an inner peripheral surface of the rotor housing 142 correspondingly to the coil 123 of the stator 120.

The polygon mirror 200 is an optical member having a plurality of reflective surfaces (or facets) 210 formed on its outside, and has a hollow 220 in which the rotor frame 141 is inserted. When the rotor frame 141 is inserted in the hollow 220, it can be fixed by a separate fixing piece 150. In detail, the fixing piece 150, being placed outside the polygon mirror 200, is elastically coupled to a stepped portion 141 a which is formed on a peripheral surface of the rotor frame 141, to thereby fix the polygon mirror 200 onto the rotor frame 141. I.e., the polygon mirror 200 and the rotor 140 can be coupled to each other by the fixing piece 150, thereby rotating together.

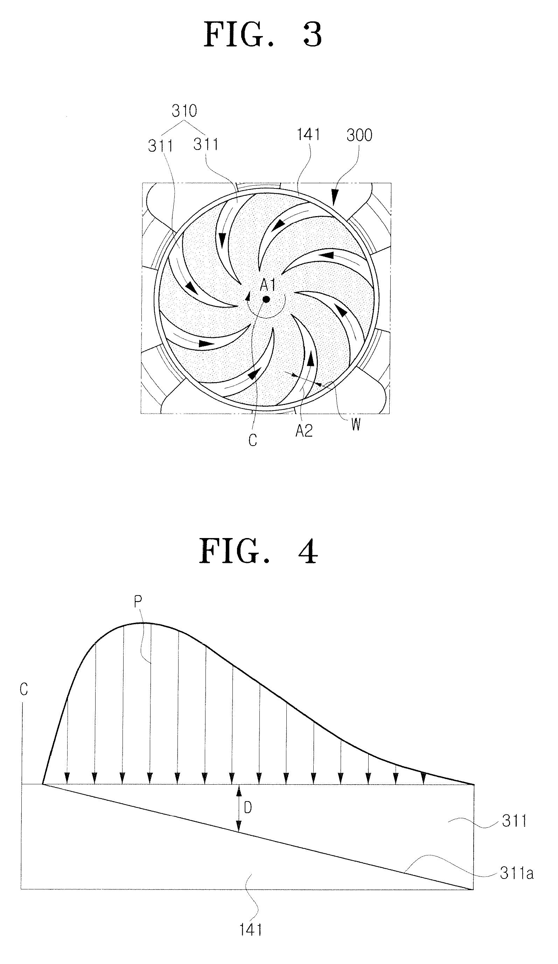

The dynamic pressure generator 300 generates a dynamic pressure P to force the rotor 140 to move toward or to a position close to the stator 120 by an air flow generated around the rotor 140 during its rotation. As illustrated in FIG. 1 and FIG. 3, such a dynamic pressure generator 300 can be provided with a predetermined dynamic pressure generating pattern 310 formed on the rotor 140, or on the outer surface of the rotor frame 141 to be more specific. The dynamic pressure generating pattern 310 can include plural helical grooves 311 helically formed on the outside of the rotor frame 141 from a center C of the rotation.

The helical grooves 311 can be formed at regular intervals to a predetermined curvature in the rotation direction A1 of the rotor frame 141.

As illustrated in FIG. 4, the helical groove 311 can have an increasing depth D as it gets farther from the center C of the rotation. As such, a bottom surface 311 a of the helical groove 311 can be inclined towards the center C of the rotation from the outside.

Going back to FIG. 3, a width W of the helical groove 311 may increase as it gets farther from the center C of the rotation. According to the dynamic pressure generating pattern 310 having such helical grooves 311, the rotor 140, including the rotor frame 141, rotates in the A1 direction, while the ambient air of the rotor frame 141 is guided by each of the helical grooves 311 and travels in an A2 direction. At this time, the air that travels in A2 direction along the helical grooves 311 increases in its flow rate and eventually in pressure because the depth D and the width W of the helical groove 311, i.e., the cross-section of the helical groove, are gradually decreased. The dynamic pressure P thus generated increases sharply on a side of the center C of the rotation, as illustrated in FIG. 4 and FIG. 2. This dynamic pressure P restrains the rotor 140 from moving away from the stator 120 in the axial direction of the shaft 130 due to, for example, gravity. Thus, as illustrated in FIG. 2, even if the spindle motor assembly is installed upside down, the polygon mirror 200 and the rotor 140 still rotate, having overcome the influence of gravity, so that the polygon mirror 200 can rotate stably in the axial direction of the shaft 130 without experiencing any displacement. Consequently, it becomes possible to improve the accuracy of scanning light scanned by the polygon mirror 200. While the spindle motor assembly illustrated in FIG. 2 is installed upside-down with respect to gravity to illustrate the effects of the dynamic pressure generator 300, the present general inventive concept is not limited thereto, and the dynamic pressure P can also restrain the rotor 140 from moving away from the stator 120 in the axial direction of the shaft 130 when the spindle motor assembly is mounted in different positions with respect to gravity, for example, when the spindle motor assembly is mounted tilted with respect to gravity.

Reference numeral 160 in FIGS. 1 and 2 denotes a stopper that can be installed on the substrate 110. The stopper 160 is disposed to be overlapped with the outside of the rotor housing 142 in the axial direction of the shaft 130, to thereby structurally prevent the rotor housing 142 from being separated completely from the stator 120.

The dynamic pressure generator 300 of the present general inventive concept prevents the rotor 140 from being separated from the bearing 125 within its movement range between the stopper 160 and the substrate 110. By controlling the rotor 140 to stay at a fixed position about the axial direction of the shaft 130, it becomes possible to stably maintain the rotation force generated between the stator 120 and the rotor 140 and the displacement and rotation speed of the polygon mirror 200.

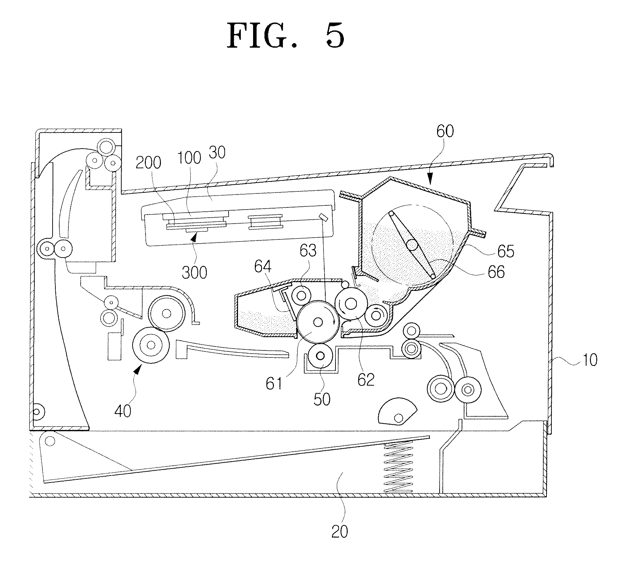

FIG. 5 is a schematic perspective view illustrating an image forming device employing the spindle motor assembly according to an exemplary embodiment of the present general inventive concept.

Referring to FIG. 5, the image forming device may include a main body 10 of the image forming device, a paper feed unit 20 installed at a lower portion of the main body 10 to supply a printing medium, a laser scanning unit 30, a fixing unit 40, a transfer roller 50, and a developing unit 60.

In this structure, the paper feed unit 20 picks up the printing medium and supplies the printing medium between the transfer roller 50 and an image bearer 61 of the developing unit 60.

The developing unit 60 is provided with the image bearer 61 on which an electrostatic latent image of a desired image is formed by a laser light beam scanned from the laser scanning unit 30 to form an image, a developer supply unit 62 to supply a developer to the image bearer 61, a charging roller 63, and a cleaning blade 64. The developing unit 60 further may include a developer cartridge 65 to contain the developer, a stirrer 66, and so on. Since the construction of the developing unit 60 can easily be learned from the well-known technology, further details will not be provided hereinafter.

Meanwhile, the fixing unit 40 fixes an image onto the printing medium while it passes through the transfer roller 50 and the image bearer 61.

The laser scanning unit 30 can scan a laser light onto the image bearer 61. In the laser scanning unit 30, a spindle motor assembly including the spindle motor 100 and the polygon mirror 200 as illustrated in FIGS. 1 through 4 is installed upside down. The laser scanning unit 30 may include, besides the spindle motor assembly, a series of known optical system that can include a light source (laser diode), a collimating lens, an F-theta lens, a reflective mirror, and so forth.

As such, in a case of employing the laser scanning unit 30 on which the spindle motor assembly is installed upside down, the dynamic pressure generator 300 of the spindle motor 100 serves to prevent the rotating bodies (the polygon mirror 200 and the rotor 140) of the spindle motor assembly from inclining downwards by their unladen weights. In this way, it becomes possible to stably maintain the scanning position of a reflected light through the polygon mirror 200.

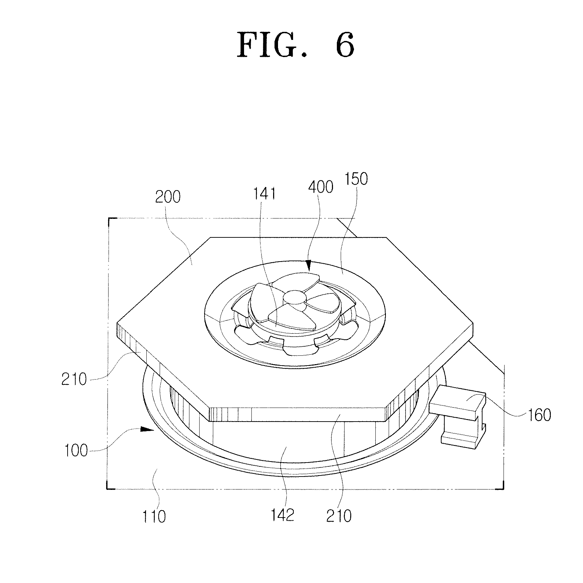

FIG. 6 is a schematic perspective view illustrating a spindle motor assembly according to another exemplary embodiment of the present general inventive concept. In FIG. 6, like reference numerals are given to the like elements of the spindle motor assembly illustrated in FIG. 1.

Referring to FIG. 6, a dynamic pressure generator 400 is provided to a rotor frame 141. Here, the dynamic pressure generator 400 is built in a predetermined pattern, for example, a propeller form. The propeller can be integrally formed by processing an outer exposed surface of the rotor frame 141, so that an air flow is generated towards the center of rotation during the rotation of a rotor 140. This increases the dynamic pressure as it goes closer to the center of the rotation. This propeller-type dynamic pressure generator 400 may be integrally formed on the rotor frame 141, or may be formed in a separate form by being coupled to a special propeller member (not illustrated).

While the embodiment of the present invention illustrated in FIG. 6 illustrates a 4-wing propeller, there is no limitation to the number of propeller wings, and different numbers of wings can be used for the propeller-type dynamic pressure generator 400. Similarly, while a helical grove spiral shape was illustrated in the dynamic pressure generator 300 illustrated in FIGS. 1 and 3, the present general inventive concept is not limited thereto, and different shapes can be used to create an effective force P.

According to the spindle motor and the spindle motor assembly, and the image forming device having the same, of preferred embodiments of the present general inventive concept, helical grooves formed on the upper surface of the rotor frame serve to generate a dynamic pressure in the axial direction of the shaft during the rotation of the rotor to thereby prevent the separation of the rotor without adding a separate part or a subsidiary material.

In addition, as the shaft coupled to the rotor is closely contacted to the bearing, the polygon mirror may operate at a fixed axial position.

Although the exemplary embodiment of the present general inventive concept has been described, it will be understood by those skilled in the art that the present general inventive concept should not be limited to the described exemplary embodiment, but various changes and modifications can be made within the spirit and scope of the present general inventive concept as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A spindle motor (100), comprising:
a shaft (130) rotatably coupled to a stator (120);
a rotor (140) to rotate with the shaft (130); and
a dynamic pressure generator (300) to generate a dynamic pressure to make the rotor (140) move toward the stator (120) by an ambient air flow generated during a rotation of the rotor (140).

2. The spindle motor (100) according to claim 1, wherein the rotor (140) comprises:
a rotor housing (142) to support a magnet (143); and
a rotor frame (141) coupled to the rotor housing (142), onto which the shaft (130) is fixed and the dynamic pressure generator (300) is mounted.

3. The spindle motor (100) according to claim 1 or 2, wherein the dynamic pressure generator (300) comprises:
a dynamic pressure generating pattern (310) formed in a predetermined pattern on an outer surface of the rotor frame (141).

4. The spindle motor (100) according to claim 3, wherein the dynamic pressure generating pattern (310) comprises:
a plurality of helical grooves (311) that are helically formed outwardly from a center of the rotation of the rotor frame (141).

5. The spindle motor (100) according to claim 4, wherein each of the helical grooves (311) has an increasing width as it goes farther from the center of the rotation.

6. The spindle motor (100) according to claim 4 or 5, wherein each of the helical grooves (311) has an increasing depth as it goes farther from the center of the rotation.

7. The spindle motor (100) according to any of claims 4 to 6, wherein each of the helical grooves (311) has an increasing cross-section as it goes farther from the center of the rotation.

8. The spindle motor (100) according to any preceding claim, wherein the dynamic pressure generator (300) comprises:
a dynamic pressure generating pattern (310) formed in a predetermined pattern on the outer surface of the rotor (140) crossing the shaft axial direction, to guide the ambient air to the center of the rotation during the rotation of the rotor (140).

9. The spindle motor according to any of claims 1, 2 or 3 or claim 8 when dependent on claim 1, 2 or 3 and wherein the dynamic pressure generator (300) comprises:
a propeller formed on the outer surface of the rotor (140) to guide the ambient air to the center of the rotation during the rotation of the rotor (140).

10. A spindle motor assembly, comprising:
a shaft (130) rotatably coupled to a stator (120);
a rotor (140) to rotate with the shaft (130);
a polygon mirror (200) to rotate together with the rotor (140); and
a dynamic pressure generator (300) to generate a dynamic pressure to make the rotor (140) contact toward the stator (120) by an ambient air flow generated during a rotation of the rotor (140).

11. The spindle motor assembly according to claim 10, wherein the rotor comprises:
a rotor housing (142) to support a magnet (143); and
a rotor frame (141) coupled to the rotor housing (142), onto which the polygon mirror (200) is supported and the dynamic pressure generator (300) is mounted.

12. The spindle motor assembly according to claim 10 or 11, wherein the dynamic pressure generator (300) comprises:
a dynamic pressure generating pattern (310) formed in a predetermined pattern on an outer surface of the rotor frame (141).

13. The spindle motor assembly according to claim 12, wherein the dynamic pressure generating pattern (310) comprises:
a plurality of helical grooves (311) that are helically formed outwardly from a center of the rotation of the rotor frame (141).

14. The spindle motor assembly according to claim 13, wherein each of the helical grooves (311) has an increasing width as it goes farther from the center of the rotation.

15. The spindle motor assembly according to claim 13 or 14, wherein each of the helical grooves (311) has an increasing depth as it goes farther from the center of the rotation.

16. The spindle motor assembly according to any of claims 13 to 15, wherein each of the helical grooves (311) has an increasing cross-section as it goes farther from the center of the rotation.

17. The spindle motor assembly according to claim 10, wherein the dynamic pressure generator (300) comprises:
a dynamic pressure generating pattern (310) formed in a predetermined pattern on the outer surface of the rotor (140) crossing the shaft axial direction, to guide the ambient air to the center of the rotation during the rotation of the rotor (140).

18. The spindle motor assembly according to any of claims 10 to 17, further comprising:
a fixing piece (150) coupled between the polygon mirror (200) and the rotor (140), to fix the polygon mirror (200) onto the rotor (140).

19. The spindle motor assembly according to any of claims 10, 11 or 12 or claim 17 or 18 when dependent on claim 10, 11 or 12, wherein the dynamic pressure generator (300) comprises:
a propeller formed on the outer surface of the rotor frame (141).

20. An image forming device, comprising:
a developing unit (60), installed in a main body (10) of the image forming device and having an image bearer (61); and
a laser scanning unit (30) to scan a laser light beam to the image bearer (61), the laser scanning unit (30) comprising:
a shaft (130) rotatably coupled to a stator (120),
a rotor (140) to rotate with the shaft (130),
a polygon mirror (200) to rotate with the rotor (140), and
a dynamic pressure generator to generate (300) a dynamic pressure to make the rotor (140) move toward the stator by an ambient air flow generated during a rotation of the rotor (140).

21. The image forming device according to claim 20, wherein the dynamic pressure generator (300) comprises:
a dynamic pressure generating pattern (310) having a plurality of helical grooves (311) that are helically formed outwardly from a center of the rotation of the rotor frame (141).

22. The image forming device according to claim 20, wherein the dynamic pressure generator (300) comprises:
a propeller formed on the outer surface of the rotor frame (141).

23. The image forming device according to any of claims 20 to 22, wherein the laser scanning unit (30) is installed in the main body (10) such that the spindle motor assembly is upside down in the main body (10) with respect to gravity.

24. A spindle motor (100), comprising:
a stator (120);
a rotor (140) to rotate with respect to the stator (120); and
a dynamic pressure generator (300) formed on the rotor (140) to generate a dynamic force to push the rotor (140) toward the stator (120) during a rotation of the rotor (140).

25. The spindle motor (100) of claim 24, wherein the dynamic pressure generator (300) guides an air flow generated during the rotation of the rotor (140) to generate the dynamic force.

26. The spindle motor (100) of claim 24 or 25, wherein the dynamic pressure generator (300) comprises a patterned rotating portion to rotate (140) with the rotor and to guide an air flow generated during the rotation of the rotor (140) to generate the dynamic force.

27. The spindle motor (100) of any of claims 24 to 26, wherein the dynamic pressure generator comprises:
a groove formed on a surface of the rotor (140) in a direction to generate an air flow in the center of the rotor (140).

28. The spindle motor (100) of any of claims 24 to 27; wherein the rotor (140) rotates about a rotation axis, and the dynamic pressure generator (300) is formed on a surface of the rotor (140) perpendicular to the rotation axis.

29. The spindle motor (100) of any of claims 24 to 28, wherein the dynamic pressure generator (300) comprises:
a plurality of grooves formed between a surface of the rotor (140) to generate a pressure in the grooves opposite to a rotation direction of the rotor (140).

30. An image forming apparatus, comprising:
a developing unit (60), installed in a main body (10) of the image forming device and having an image bearer (61) ; and
a laser scanning unit (30) to scan a laser light beam to the image bearer (61), the laser scanning unit (30) having a spindle motor (100), the spindle motor (100) comprising:
a stator (120);
a rotor (140) to rotate with respect to the stator (120); and
a dynamic pressure generator (300) formed on the rotor (140) to generate a dynamic force to push the rotor toward the stator during a rotation of the rotor (140).

31. The image forming apparatus of claim 30, wherein the laser scanning unit (30) further comprises:
a stopper (160) to limit a motion of the rotor (140) with respect to the stator (120).
